# EUROPEAN PATENT SPECIFICATION

(11) **EP 1 377 650 B1**
(45) Date of publication and mention of the grant of the patent: **05.03.2008**
(21) Application number: 02714254.6
(22) Date of filing: 12.04.2002
(51) Int. Cl.: C10B 49/22, C10J 3/54

(54) **PROCESSING OF CARBONACEOUS MATERIAL**
VERARBEITUNG VON KOHLENSTOFFHALTIGEM MATERIAL
TRAITEMENT D'UNE MATIERE CARBONEE

(30) Priority: 12.04.2001 FI 20010781
(43) Date of publication of application: 07.01.2004
(73) Proprietor: Neste Oil Oyj, 02150 Espoo (FI)
(72) Inventor: GUST, Steven, FIN-06100 Porvoo (FI); NIEMINEN, Jukka-Pekka, FIN-06400 Porvoo (FI); HILTUNEN, Jyrki, FIN-04130 Sipoo (FI); KNUUTTILA, Pekka, FIN-06400 Porvoo (FI); FABRITIUS, Marko, FIN-00420 Helsinki (FI); JOKELA, Pekka, FIN-01710 Vantaa (FI); PARTANEN, Jatta, FIN-01390 Vantaa (FI)
(74) Representative: Sundman, Patrik Christoffer
(86) International application number: PCT/FI2002/000314
(87) International publication number: WO 2002/083816

(56) References cited:
- US-A- 4 147 593
- US-A- 5 728 271
- US-A- 5 961 786

## Description

### Backgound of the Invention

### Field of the Invention

The present invention relates to a process according to the preamble of claim 1 for transforming carbonaceous material in a reactor into solids, liquids and gases by the application of heat and, preferably catalysts or other solid matter.

According to a process of this kind, carbonaceous material is fed into the riser section of a reactor wherein it is brought into intimate contact with heated solids formed primarily of inorganic particulate material at an elevated temperature and hot reactor walls essentially in the absence of oxygen in order to convert the carbonaceous material at least primarily into gaseous heat treatment products whereby a gas phase is provided, containing fluidization gas and heat treatment products. The particulate material is separated from the gas phase in one or more separation units, preferably in multiport cyclones, and the separated material is then transported to a thermal oxidizing unit where its temperature is raised at least partially by oxidation of organic material and the inorganic particles are recycled to the riser section. The heat treated products are recovered and usually at least partially condensed to form liquid products.

### Description of Related Art

The conversion of carbonaceous materials, especially those of a renewable nature, in a highly efficient and environmentally benign manner is currently receiving considerable attention as society is recognizing the need to find economical replacements for fossil energy sources of coal, oil and natural gas. A number of processes are currently being developed to convert said carbonaceous feedstocks into liquid fuels and include fermentation to produce ethanol, gasification to produce methanol or hydrocarbons via the Fischer-Tropsch reaction, high pressure liquefaction in slurries and pyrolysis or thermolysis processes to produce liquids, solids and gases.

The pyrolysis process in general is defined as an incomplete thermal degradation process resulting in char or solids, condensible gases forming liquids and tars and gaseous products. Pyrolysis is carried out in the absence of or under very low concentrations of oxygen (i.e. "essentially in the absence of oxygen"). Depending on the conditions under which the reaction takes place and how the products are recovered, the primary product can be either solid, liquid or gas.

The main advantages of the present day pyrolysis process over other conversion processes are its high thermal efficiency and its relative simplicity leading to reasonable costs. Although the yields of liquids of pyrolysis processes have been greatly increased during the last 30 to 40 years from roughly 30 weight percent up to 70 weight percent, there still does not yet exist major widespread commercial implementation of these technologies.

There are many classifications possible for pyrolysis processes. They can be roughly divided into charcoal processes, liquid processes and fuel gas processes. Liquid products are particularly interesting because of their ease of handling and use. The liquid processes are further subdivided into flash, fast or rapid processes and traditional, slow pyrolysis processes. Here the rate or speed of the process refers to the heating rates and residence times in the reactor.

In the slow processes or destructive distillation, wood is covered with earth or placed in kilns or retorts and slowly heated by combusting part of the wood fuel itself. Air is supplied at rates in which only a part of the feedstock can be combusted. Depending on how the vapours are recovered, the temperatures used, the dryness and the size of the feedstock, this slow process produces a combination of highly viscous liquids, making up 20 - 40 % of the product, and charcoal. In the process, when vapour residence times are long, secondary reactions of the vapours can occur. The liquids are primarily a combination of heavy tars 20-30% , pyroligneous acids 5 - 10 %, substituted phenols 15 - 30 % and breakdown products of sugars 10-15% .Pyrolysis processes can also be used for the production of charcoal - the process is then called "carbonisation" - or for the production of fuel gases. The latter process is called "gasification".

In order to improve these old processes and increase product yields, the effect of temperature, heating rate, vapour residence time, cooling rate of the vapours and oxygen concentration was studied. It was found that liquid yields could be significantly increased by increasing the heating rate, decreasing the feed particle size, limiting secondary reactions and limiting the maximum temperature of the process. A large number of different reactor variations have been tested and a good summary of their results is given in a review article in Biomass Pyrolysis Liquids and Upgrading and Utilisation, editors A.V. Bridgewater and G. Grassi Elsevier 1991. Here the different reactors for pyrolysis are listed as twin fluid bed, autoclave, entrained flow, fixed bed, shallow fluid bed, rotary furnace, vortex/cyclone, multiple hearth, stirred bed with air and transport bed. A general conclusion from these works was that the concentration of oxygen in the systems must be minimized in order to avoid combustion and the production of water and reduction of liquid yield. Many of these reactor configurations were built in laboratories and had poor prospects for scale-up and commercialisation. Conditions for high liquid yield were found to be: short residence times of 0.1 to 2 seconds, moderate maximum temperatures of 475 to 525 °C, high heating rates of 1,000 to 10,000 K/second and rapid cooling or quenching of the vapours in 1 - 5 seconds.

Since the heat required to carry out this conversion cannot be supplied by the combustion of a portion of the feedstock in the same reactor if the production of water and carbon dioxide is to be minimized, the heat transfer must be carried out by secondary means such as from a hot surface in direct contact or through radiation or by heating with hot inert carrier gases. All of these heat transfer modes have been tested. In theory any one or combination of these could be used to carry out this process. In practice the most common and effective means of transferring the required heat is by direct contact with hot particulates (heat carriers), such as hot sand, in a fluidizer transport bed. Other possibilities for the particulate heat source could be various catalysts or the hot char from the pyrolysis process itself.

Variation of process conditions as a means for maximizing liquid yields has been described in great detail in a series of patents, first by Garret and later by Choi of Occidental who during the 1970's and early 1980's developed a fast pyrolysis process and apparatus. They were awarded US Patents Nos. 4,064,018, 4,078,973, 4,083,751, 4,088,541, 4,153,514, and 4,101,412.

In the above process the conditions for maximizing liquid yields were temperatures in the range of 475 to 525 °C, and residence times of less than 1 second. The liquid yields were, depending on feedstock, up to 50 weight percent. The main reason for these relatively low liquid yields compared to present processes with up to 70 weight percent liquid yields is the use of the by-product char as the heat carrier. The char is known both to absorb pyrolysis vapours and to cause further chemical reactions similar to gasification or cracking.

Heat transfer to a pyrolysis reactor by hot sand is detailed in US Patent No. 3,853,498 by Richard C. Bailie. Here a process for the production of high energy fuel gas from municipal wastes using a twin fluidised bed reactor is described. The waste char from the process is combusted in a separate fluidised bed which raises the temperature of the sand used for heating the sand bed employed in pyrolysis of the incoming feedstock.

In two related patents (US 5,792,340 and US 5,961,786), Freel and Graham describe a pyrolysis process in an upflow entrained bed transport reactor with heat carrier recirculation. Here they emphasize the importance of very high heating rates, short residence times and high ablation to obtain maximum yields of liquids. This reactor suffers from very high gas circulation volumes required to transport the inorganic heat supplying material at a mass ratio versus the carbonaceous feedstock in the range of 12:1 and 200:1. The inventors also emphasize the requirement of very high heating rate and short residence times in order to maximize liquid yields but further in the description it is stated that in vacuum pyrolysis the very rapid heat transfer is not required. Another problem with their reactor system is that a means to fully and effectively oxidize product char in a separate unit is not provided and thus char is at least partially returned with the hot solids recirculation system back to the reactor which is known to thermally crack pyrolysis vapours and lower liquid yields.

In yet another related pyrolysis patent, US Patent No 5,728,271 an indirectly heated, deep, bubbling fluidized bed in which a high liquid yields similar to other fast pyrolysis processes can be obtained at relatively low temperatures, moderate heating rates and relatively long solids and gas residence times. Thus it can be shown that the very fast heating rates and very short residence times detailed by Freel and Graham are not necessary in order to achieve high liquid yields.

### Summary of the Invention

It is an object of the present invention to eliminate the problems of the prior art and to provide a novel process for pyrolysis of carbonaceous feedstocks, such as agricultural and forestry wastes and residues, municipal solid wastes (MSW) and other carbon containing feedstocks.

These and other objects, together with the advantages thereof over known processes, which shall become apparent from the specification which follows, are accomplished by the invention as hereinafter described and claimed.

The present invention is based on the finding that a high pyrolysis liquid yield with an enhanced product quality based on very low concentrations of solid contaminants in the liquid fuel can be obtained by pyrolysing a carbonaceous feed in the riser space of a fluidized bed reactor under process conditions in which the fluidized bed is maintained in a state of turbulent or rapid fluidization followed by rapid removal of solid particulates from the product stream using one or more multiport cyclones. This turbulent or rapid fluidization is accomplished by maintaining a velocity ratio between the gas and the particles of 2 or less wherein there is formed a dense bed-in the riser. In such a dense bed, the heat transfer from heat carrier particulates to carbonaceous feedstock will be very efficient. Also in such a dense bed it can effectively be ensured that large particles residence time is lengthened to undergo pyrolysis reactions whereas the gases once formed will rapidly escape from the reactor and not undergo secondary reactions.

Typically, a dense bed suitable for the present invention can be formed by providing a relatively large number of particles have a relatively small particle size. A dense suspension comprises - based on the particle number - about 7 x 10⁸ to 3 x 10¹¹ particles/m³ (about 2 x 10⁷ - x 10¹⁰ particles/ft³). By maintaining the mass ratio of heat carrying particulate matter bringing heat into the reactor and the carbonaceous material in the range of 1:1 to 10:1 particularly advantageous pyrolysis conditions can be attained.

More specifically, the process according to the present invention is mainly characterized by what is stated in the characterizing part of claim 1.

Considerable advantages are obtained by the present invention. As a consequence of the relatively small size of the particulate heat transfer medium, the specific unit surface area of the heat carrying particulates is increased and the mass ratio of heat carrying particulates to the feedstock to be pyrolyzed is lowered and minimized thus reducing the total mass of particulates to be circulated and the size and cost of downstream processing equipment.

The required mass of heat carrying particulates can further be reduced by placing the pyrolysis reactor into the by-product char combustion chamber thus maintaining the reactor walls at appropriate temperatures for enhancing pyrolysis reactions.

According to a preferred embodiment, the present invention utilizes multiport cyclones as an integral part of the process either in combination with normal cyclones or alone at the outlet of both the pyrolysis reactor and of the char combustion chamber. The multiport cyclones significantly enhance the quality of the pyrolysis liquid by improving the collection efficiency of the separation unit, which reduces the concentration of microchar in the liquid product which creates a more stable product and improves its ease of use. The multiport cyclones also enhances the removal of fly ash from the char combustion chamber which prevents its circulation back to the pyrolysis reactor and the subsequent reduction in product yields.

Using the above mentioned heat carrier particulates, the mixing of the heat transfer medium and the solid feed and the fluidization gas is improved. As a consequence it becomes possible to use coarser and less uniform feed, because the residence time of the coarse particles is prolonged in relation to that of the more finely divided. The residence times are of suitable length to guarantee a product of high quality.

The present invention eliminates the problems of pyrolysis systems in the prior art also by introducing an improved solids separation system which allows for achieving benefits not previously obtained by pyrolysis of carbonaceous feedstocks. The present invention also reduces the heat demand to the pyrolysis reactor.

### Brief Description of the Drawings

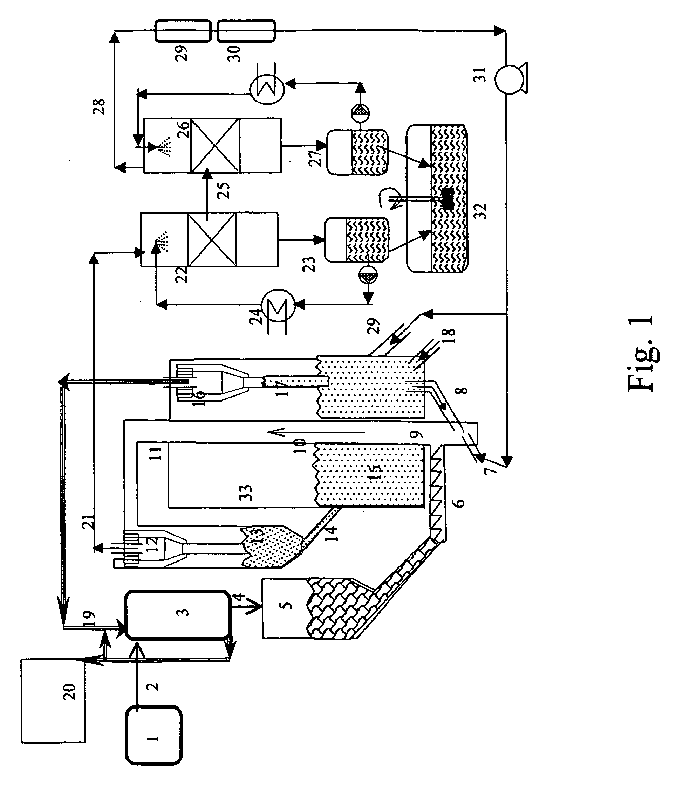

Next the invention will be examined in more closely with the aid of the following detailed description with reference to the attached drawing, Fig. 1, which shows a process diagram of a preferred embodiment of the invention.

### Detailed Description of the Invention

As disclosed above, the present invention is based on the concept of using heat carriers, such as solid sand particles or catalyst particles etc. having a relatively small particles size and of sufficiently high number to form a dense bed coupled together with hot reactor walls for transferring the required heat into a reactor used for pyrolysis of carbonaceous materials, such as biomass and wastes. Typically, the particle sizes are on the order of 10-150 micrometers, preferably about 50 to 120 micrometer. The velocity of the fluidization gas in the reactor is maintained in a range which allows for fluidization in the regime of turbulent or rapid fluidization, whereby the velocity ratio between the gas and the particles is smaller than about 2 along the whole length of the riser space. A dense suspension is formed into the riser space of the reactor, containing - based on the particle number - 7 x 10⁸ to 3 x 10¹¹ particles/m³ (about 2 x 10⁷ - 1x 10¹⁰ particles/ft³), and the mass flow ratio between the particulate matter bringing heat into the reactor and the carbonaceous material is 1:1 to 10:1, preferably about 2:1 to 10:1.

As a consequence of the above, in comparison to conventional processes, the specific unit surface area of the heat carrying particulates is increased and the mass ratio of heat carrying particulates to the feedstock to be pyrolyzed is low and minimized thus reducing the total mass of particulates to be circulated and the size and cost of downstream processing equipment.

The residence time in the reactor of produced gases is about 0.01 to 10 s, preferably about 0.1 to 5 s, in particular about 0.5 to 1 s while the residence time of solids in the reactor is significantly longer, on the order of 2-20 s

The process unit of the present invention generally comprises two sections, namely a first section in which the carbonaceous material is pyrolysed essentially in the absence of oxygen but in the presence of a heat carrier in particulate form, and a second section (an oxidation unit) in which organic pyrolysis products that have been potentially deposited on the heat carrier surface plus the organic solid residues removed in the separation units are thermally oxidized in the presence of oxygen to provide a heat carrier which is freed from solid depositions. More particularly, the inorganic particulate material forming the reactor bed material is treated with an oxygeneous gas in a separate oxidation unit comprising a fluidized bed reactor, the material fed into the oxidation unit is fluidized with an oxygeneous gas in order to burn off the combustion residue attached to the material, and the material obtained from the oxidation unit is recycled to the reactor. The oxygeneous gas can comprise pure or purified oxygen, or oxygen in mixture with other gases, for example air or synthetic mixtures of oxygen and nitrogen and/or noble gases. The oxidation unit preferably comprises a circulating fluid bed reactor. It may also comprise an internal circulation for adjustment of the residence time and the regeneration degree. Alternatively, the oxidation unit can be comprised of a bubbling fluid bed reactor.

Under operation at circulating fluidized bed conditions, the oxidation section and the pyrolysis section form an integral unit in which the bed material flows under rapid fluidization from the reactor to the oxidation unit and back again to the reactor, the oxidation unit can be seen as a pneumatic conveyor of the bed material which conducts the bed material from the separation unit (discussed in more detail below) of the solid materials back to the reactor.

According to a preferred embodiment, in order to reduce the amounts of circulating gases and to provide energy for heating of bed material, the uncondensed gases produced by the process may also be conducted into the oxidation unit, where they are at least partially combusted.

It is possible to implement the invention by providing as the oxidation unit a simple circulating fluidized bed reactor which is dimensioned primarily only for achieving two purposes, namely removal of combustion residue from the bed material and for producing heat to the extent needed by the thermal treatment. In this case, the final burning-off of the combustion residue, recovery of excess heat and treatment of flue gases are accomplished within another boiler unit.

As mentioned above, the solids of the reactor comprising the heat carrying particulates and pyrolysis char are separated from the product gas flow and introduced into the oxidation unit. Preferably the separation unit used for separating solid materials from gaseous materials comprises a multiport cyclone. We have found that very small char particles, so called micro-char having particle sizes of less than 10 micrometers, cannot be removed effectively by ordinary cyclones without increasing gas velocities and pressure drops significantly across the cyclone which lead to a more complex and costly process. The presence of microchar in the liquid product causes serious quality problems for the further use of pyrolysis liquids since it has been found that pyrolysis liquids with solid concentrations greater than 0.3 to 0.4 weight percent clog nozzles and pumps and valves used to transport and combust these liquids. With the use of multiport cyclones, such particles can be very effectively removed and the condensed liquids purified to particle concentration levels of less than 0.1 weight percent while maintaining low gas velocities and associated equipment costs. In practice it is particularly preferred to carry out the separation by providing a cascade of cyclones wherein at least one other cyclone, selected from single inlet cyclones and multi inlet cyclones, are placed in series arrangement with the multiport cyclone. For example, the cascade of cyclones may comprise a first separation stage, which is formed by a single inlet port cyclone, and a second separation stage, which is formed by a multi inlet cyclone.

According to a particular embodiment, for separation of the solid matter a cyclone is employed which has an outer surface, which can be cooled and/or heated.

Heat transfer and economy of heat transfer are important for the economic operation of a pyrolysis unit. The reactor and the oxidation unit are mounted together such that the hot part of both the reactor and the oxidation unit each have a common wall whereby at least a part of the heat needed in the reactor is brought through the common wall. Preferably, the heat is brought into the reactor partially by using a heat transfer medium and partially directly via the common wall of the reactor and the oxidation unit.

The thermal oxidation reactor unit can be of conventional fluidized bed or circulating fluidized bed design. However, it is possible to provide the riser unit of the reactor with internal vanes for increasing the turbulence of the reactor flow. A preferred embodiment comprises using a reactor, which has a riser with an axially annular cross-section which is provided with a multiport cyclone for separation of the particulate matte, and an oxidation unit which has a riser with an axially annular cross-section which is fitted concentrically inside the reactor, whereby said oxidation unit is provided with a multiport cyclone for separation of the treated particulate material.

The solid matter, including heat carriers and pyrolysis products (combustion residues) are generally separated in two stages, whereby a first portion mainly comprising solid matter is separated in a first stage and recycled to an oxidation unit, and a second portion mainly comprising combustion residue is separated in a second stage and used in a separate process.

The gaseous phase product stream is conducted to a recovery section in which it is mainly condensed and the pyrolysis liquid recovered, as will be explained in more detail in connection with the attached example. The uncondensed gas obtained from condensation of the heat treatment products is recycled to the riser space in the form of circulation gas. The amount of the circulation gas is, expressed as gas volumes, 0.5- to 2-fold the amount of the uncondensed heat treatment products.

In order to maximize the environmental benefits of these processes, it is of great importance to select carbonaceous feedstocks that can be obtained with very minor fossil fuel inputs. The carbonaceous feedstocks of interest here are derived from plants or biomass based feedstocks such as trees, sawdust, plant residues from forestry or agricultural processes, municipal solid waste (MSW) and refuse derived fuel (RDF). These feedstocks when left to rot or biologically decompose produce gases such as carbon dioxide or methane. Other feedstocks, such as purpose grown crops, have in general high fertilizer inputs, which were manufactured using fossil fuels and so their fossil fuel savings are much less than those for wastes and residues.

Turning now to the embodiment of the attached drawing (Fig. 1, showing an Apparatus for Processing Carbonaceous Material), it can be noted that the pyrolysis equipment according to the present invention primarily comprises three sections, namely a pretreatment unit (reference numerals 1 - 6) for pre-treating and conveying the carbonaceous feedstock from storage to pyrolysis; a pyrolysis unit (reference numerals 7-18) including a reactor unit (7 -15) and a oxidation unit (15 - 18,33); and a recovery unit (reference numerals 22 - 32) for collecting the pyrolysis products, for condensing gaseous compounds and for recirculating uncondensable compounds. The feed of the pyrolysis unit (1- 6) comprises carbonaceous material usually in solid or liquid form. The outlet of the pyrolysis unit comprises gaseous compounds. The heat transfer medium is recirculated between the reactor unit (9 -14) and the oxidation unit (15 -18, 33); and uncondensable gas is recirculated from the recovery unit (22 - 3) to the pyrolysis unit (7-18) for use as fluidization gas.

In the drawing, reference numeral 1 stands for a size reduction unit in which the solid feed material is reduced to the appropriate dimensions. For biomass feeds this unit can comprise a crusher or shredder. The reduced size feed material is transferred to a moisture adjusting unit 3 by, for example, a belt or screw feeder 2 or pneumatically. The water content is adjusted to the appropriate level in, for example a drier 3. In the shown configuration, hot flue gases from the regenerator 16 - 18, 33 are used to dry feed.

The feed material is transferred to a feed silo 5 by for example a belt or screw feeder 4 or pneumatically. The feed is stored in a temporary feed silo 5 to ensure non-interruptible delivery to the reactor, for dry feeds of small particle size where possibility of self-ignition exists, an inert atmosphere such as nitrogen is maintained in the silo. Screw feeder 6 transfers feed material into the base of the reactor 10 (riser) at a distance of approximately 300-800 mm above the feed points of the hot bed material and the fluidizing gas. Non-condensible gases from the vapour recovery unit 22 are used to fluidise bed material and feed material to the appropriate velocity and degree of fluidisation.

Heat transfer particulates are transferred from a heat producing thermal oxidizer 16 - 18, 33 by a return pipe 8. A turbulent mix of non-condensible gases, hot particulates and feed materials are mixed at the outlet of the screw feeder 9 raising the temperature of the feed material to the appropriate level and accelerating it to the appropriate velocity. The walls of the reactor vessel 10 are maintained at an appropriate temperature eliminating the need for insulation materials and reducing the heat demand of the heat transferring particulates.

Thermally transformed materials are transferred 11 to the solids removal unit 12, temperatures are adjusted in order to minimize secondary reactions. The solids removal unit 12 contains a combination of a single port cyclone together with multiport cyclones. The separation unit removes particulate matter from the gas stream.

The reactor - oxidator unit consisting of parts 7 to 18 can be based on an annular construction shown, e.g., in US Patent No. 6,045,688. In this case all cyclones are of the multiport type.

Reference numeral 13 stands for solid materials are dropped to the base of the cyclone. Numeral 14 indicates the feeding of solids into the thermal oxidizing unit. The solid materials are oxidized in a thermal oxidizer reactor 16 - 18, the gas used for oxidation being normally air which is fed from port 18. The thermal oxidizer can be operated under various conditions corresponding to a bubbling fluidised bed, turbulent bed or circulating fluidised bed, temperatures are kept under the ash fusion point of contaminants found in the feed.

The particulate removal unit 16 at the top of the riser space 33 is comprised of a combination of normal cyclones with multiport cyclones or of multiport cyclones only which return particulate bed material to the thermal oxidizer but permit fly ash from feed materials to pass through and be collected in vapour collection unit 22. Numeral 17 stands for the return pipe of captured solid particulates to the thermal oxidizer; inlet port 18 for air to thermal oxidizer. The flue gases from the thermal oxidizer are transported 19 to the moisture reduction unit 3 where temperatures are controlled by heat exchange or mixing with output gases from the dryer or by direct cooling through the surface.

A thermal oxidizer 20 is used for oxidizing organic compounds remaining in the gas stream at the outlet of the moisture reduction unit 3.

Product gases are transferred 21 to the vapour recovery unit 22 after solids have been removed in the particulate removal unit 12. In the vapour recovery unit 22 or condenser, product gases are cooled to form a liquid by a liquid spray wash using, in this case, the condensed liquid itself, other liquids are, however, also possible. Condensers can be either co-current, as depicted in the diagram, or counter-current type. In counter-current type condensers internal packing materials are normally used. The condensed liquid is transferred into a temporary storage tank 23. The temperature of the liquid used for cooling and condensing the product vapours is adjusted to the appropriate level 24. Vapours that have not been condensed in the primary condensing column 22 are transferred 25 to a secondary column 26. In the second condensing column 26, vapours are condensed to form a liquid in a manner similar to that used in the primary column. The condensed liquid is transferred into a temporary storage tank. Gases and aerosols that have not been condensed in primary 22 and secondary condensers 26 are transferred to aerosol traps 29 and 30. When counter-current type condensers are used, aerosol traps can be placed in the top of the condensers below the gas exit. Numeral 29 stands for a primary aerosol trap and 30 for a secondary aerosol trap. Primary and secondary condenser liquids are mixed in a mixing tank 31. The pressure of the non-condensible gases is adjusted in a compressor or blower 32. The recovered liquids from the aerosol traps are handled separately from other product liquids 33.

### Example 1

The appropriate fluidization regime for various feedstock particulate sizes was verified in a series of cold model experiments. Here the minimum gas velocity required to give a turbulent, circulating fluidized bed was determined. A range of bed sizes of 70-150 micrometers was used with dried and ground feedstocks. The feedstocks had a size distribution over the range of 1-5 millimeter. The optimum velocity for this purpose was found to be in the range of 4-6 meters / second when the sand bed had an average diameter of 80 micrometers. A slip velocity of roughly 2 was calculated for the ratio of the gas velocity versus the sand velocity through the bed.

### Example 2

The effect of particulate size of the heat transfer material on the mass ratio of feed material to bed material was studied by operating the test equipment process under the same process conditions except for the particulate size of the heat transfer medium. It was demonstrated that the required amount of bed could be reduced by a factor of two when reducing the particulate diameter from and average of 170 micrometres to an average size of 80 micrometres. The gas required for fluidization was naturally less with the smaller size particulates.

### Example 3

The effect of a single port cyclone versus a multiport cyclone on the concentration of solids retained in the liquid product was studied by operating the test equipment under the same process conditions and with the same bed and feed material initially with single port cyclones followed by multiport cyclone. In the experiments with two single port cyclones in series the concentration of solids in the product liquid varied over the range of 0.3 weight percent to 0.5 weight percent. This solid material was found to be char particles of a very small size in the range of about 1 to 30 micrometers. Subsequently when the cyclones were replaced with multiport cyclones, the solids concentration in the liquid product reduced to 0.1 weight percent to 0.2 weight percent.

### Example 4

The effect of process conditions on product yield and quality were tested in the following experiments. In the first set of experiments the coarser sand bed material was used with an average size of 170 micrometers. Velocity of sand through the reactor was in the range of 6-8 meters per second. The mass ratio of carbonaceous feed to bed material was in the range of 1:12 to 1:20. Normal single port cyclones were used to separate solid products and sand from the product vapours. The liquid yield for softwood forestry residues dried to 5 % and ground to less than 4 mm thick was 65 % total liquids. The product liquid phase separated due to extractives in the starting feed material with 75 weight percent in a lower phase and 25 weight percent in the upper phase. When the bed material was changed to a finer size of average diameter about 80 microns and the velocity of the gas was reduced to 4-5 meters/second to form a turbulent bed then it was found that for the same feedstock and reaction temperatures, the yield of liquids was the same with the main difference being a lower solids content in the product as described in Example 2.

## Claims

1. A method for processing carbonaceous material in a reactor, according to which method
- carbonaceous material is fed into the riser section (10) of a reactor (10 - 15) in which it is contacted with inorganic particulate material and reactor walls at an elevated temperature essentially in the absence of oxygen in order to convert the carbonaceous material mainly into gaseous processed products, whereby a gas phase is obtained, containing fluidization gas and processed products,
- the particulate material is separated from the gas phase in a separation unit (12),
- the inorganic particulate material is recirculated into the riser space (10),
- the processed products are recovered,
- the inorganic particulate material forming the reactor bed material (15) is treated with an oxygeneous gas in a separate oxidation unit (16 - 18, 33) comprising a fluidized bed reactor (33),
- the material fed (18) into the oxidation unit is fluidized with an oxygeneous gas in order to burn off the combustion residue attached to the material,
- the material obtained from the oxidation unit (16-18, 33) is recycled to the reactor (10 -15), and
- optionally at least a part of the processed products are condensed into liquid products, **characterized in that**
- a dense suspension is formed into the riser space (10) of the reactor, containing based on the particle number 7 x 10⁸ to 3 x 10¹¹ particles/m³ (about 2 x 10⁷- 1 × 10¹⁰ particles/ft3),
- the mass ratio between the particulate matter bringing heat into the reactor and the carbonaceous material is in the range of 1:1 to 10:1, and
- the reactor and the oxidation unit are mounted together such that the hot parts of both the reactor and the oxidation unit each have a common wall whereby at least a part of the heat needed in the reactor is brought through the common wall.

2. The method according to claim 1, wherein gas phase products obtained from condensation of the processed products is recycled to the riser space (10) in the form of circulation gas.

3. The method according to claim 2, wherein the amount of the circulation gas is, expressed as gas volumes, 0.5- to 2-fold the amount of the uncondensed processed products.

4. The method according to claim 1, wherein the bed material is conducted from the separation unit (16) of the solid materials to the reactor by using the oxidation unit as a pneumatic conveyor of the bed material.

5. The method according to claim 1 or 4, wherein the oxidation unit (16 -18, 33) comprises a circulating bed reactor.

6. The method according to claim 5, wherein the oxidation unit comprises an internal circulation for adjustment of the residence time and the regeneration degree.

7. The method according to claim 1 or 4, wherein the oxidation unit comprises a bubbling bed reactor.

8. The method according to any of claims 1 to 7, wherein the uncondensed gases produced by the process are also conducted (29) into the oxidation unit, where they are at least partially combusted.

9. The method according to any of claims 1 to 8, wherein the oxidation unit comprises a circulating fluidized bed reactor, which is dimensioned primarily for achieving only removal of combustion residue from the bed material and for producing heat to the extent needed by the thermal treatment.

10. The method according to claim 9, wherein final burning-off of the combustion residue, recovery of excess heat and treatment of flue gases are accomplished with another boiler unit (20).

11. The method according to any of the preceding claims, wherein the separation unit (12; 16) used for separating solid materials from gaseous materials comprises a multiport cyclone.

12. The method according to claim 11, wherein the separation unit (12; 16) comprises a cyclone cascade of cyclones wherein there at least one other cyclone, selected from single inlet cyclones and multi inlet cyclones, placed in serial arrangement with the multiport cyclone.

13. The method according to claim 12, wherein the cascade of cyclones (12; 16) comprises a first separation stage which is formed by a single inlet cyclone, and a second separation stage which is formed by a multi inlet cyclone.

14. The method according to any of the preceding claims, wherein mass flow ratio of the particulate material bringing heat into the reactor and the carbonaceous material is 1:1 to 10:1.

15. The method according to claim 1, wherein the heat is brought into the reactor partially by using a heat transfer medium and partially directly via the common wall of the reactor and the oxidation unit.

16. The method according to any of the preceding claims, wherein the reactor comprises internal vanes for increasing the turbulence of the reactor flow.

17. The method according to any of the preceding claims, comprising using for separation of the solid matter a cyclone that has an outer surface, which can be cooled and/or heated.

18. The method according to any of the preceding claims, comprising using
- a reactor, which comprises a riser having an axially annular cross-section which is provided with a multiport cyclone for separation of the particulate matter, and
- an oxidation unit which comprises a riser having an axially annular cross-section which is fitted concentrically inside the reactor, whereby said oxidation unit is provided with a multiport cyclone for separation of the treated particulate material.

19. The method according to any of the preceding claims, wherein the solid matter is separated in two stages, whereby a first portion mainly comprising solid matter is separated in a first stage and recycled to an oxidation unit, and a second portion mainly comprising combustion residue is separated in a second stage and used in a separate process.

20. The method according to claim 19, wherein the residence time in the reactor is about 0.01 to 10 s.

21. The method according to claim 1, wherein the bed (15) contains a particle number of 7 x 10⁸ - 3 x 10¹¹ particles/m³ (about 2 x 10⁷ - 1x 10¹⁰ particles/ft³).

22. The method according to any of the preceding claims, wherein the average particles size of the solid matter particles is 50 to 120 micrometer.

## Patentansprüche

1. Verfahren zur Verarbeitung von kohlenstoffhaltigem Material in einem Reaktor gemäß dem
- kohlenstoffhaltiges Material in den Steigabschnitt (10) eines Reaktors (10 -15) eingeleitet wird, in dem es mit anorganischen Teilchen und den Reaktorwänden bei einer erhöhten Temperatur im Wesentlichen in Abwesenheit von Sauerstoff in Kontakt gebracht wird, um das kohlenstoffhaltige Material hauptsächlich in gasförmige Prozessprodukte umzuwandeln, wodurch eine Gasphase erhalten wird, die Wirbelgas und Prozessprodukte enthält,
- die Teilchen in einer Trenneinheit (12) von der Gasphase getrennt werden,
- die anorganischen Teilchen dem Steigraum (10) wieder zugeführt werden,
- die Prozessprodukte rückgewonnen werden,
- die anorganischen Teilchen, die das Reaktorbettmaterial (15) bilden, mit einem sauerstoffhaltigen Gas in einer separaten Oxidationseinheit (16 - 18, 33), die einen Wirbelbettreaktor (33) umfasst, behandelt werden,
- das in die Oxidationseinheit eingeleitete Material (18) mit einem sauerstoffhaltigen Gas in den Fließbettzustand überführt wird, um den an dem Material angelagerten Verbrennungsrückstand abzubrennen,
- das aus der Oxidationseinheit (16 -18, 33) erhaltene Material dem Reaktor (10 - 15) wieder zugeführt wird, und
- wahlweise wenigstens ein Teil der Prozessprodukte in Destillate kondensiert wird,
**dadurch gekennzeichnet, dass**
- eine dichte Suspension in dem Steigraum (10) des Reaktors gebildet wird, die basierend auf der Teilchenanzahl 7 x 10⁸ bis 3 x 10¹¹ Teilchen/m³ (etwa 2 x10⁷ -1 x 10¹⁰ Teilchen/Kubikfuß) beinhaltet,
- das Massenverhältnis zwischen den Wärme in den Reaktor einbringenden Teilchen und dem kohlenstoffhaltigen Material im Bereich von 1:1 bis 10:1 liegt, und
- der Reaktor und die Oxidationseinheit derart zusammen angebracht sind, dass die heißen Teile sowohl des Reaktors als auch der Oxidationseinheit jeweils eine gemeinsame Wand aufweisen, wodurch wenigstens ein Teil der in dem Reaktor benötigten Wärme durch die gemeinsame Wand eingebracht wird.

2. Verfahren gemäß Anspruch 1, worin Gasphasenprodukte, die aus der Kondensation der Prozessprodukte erhalten werden, dem Steigraum (10) in Form von Zirkulationsgas wieder zugeführt werden.

3. Verfahren gemäß Anspruch 2, worin die Menge des Zirkulationsgases als Gasvolumen ausgedrückt 0,5- bis 2-mal die Menge der unkondensierten Prozessprodukte beträgt.

4. Verfahren gemäß Anspruch 1, worin das Bettmaterial aus der Trenneinheit (16) der Feststoffe zum Reaktor unter Verwendung der Oxidationseinheit als pneumatische Fördervorrichtung des Bettmaterials geleitet wird.

5. Verfahren gemäß Anspruch 1 oder 4, worin die Oxidationseinheit (16 -18, 33) einen zirkulierenden Bettreaktor umfasst.

6. Verfahren gemäß Anspruch 5, worin die Oxidationseinheit eine Innenzirkulation zur Einstellung der Verweilzeit und des Regenerierungsgrads umfasst.

7. Verfahren gemäß Anspruch 1 oder 4, worin die Oxidationseinheit einen Blasenwirbelschichtreaktor umfasst.

8. Verfahren gemäß einem der Ansprüche 1 bis 7, worin die durch den Prozess erzeugten, nicht kondensierten Gase ebenso in die Oxidationseinheit geleitet werden (29), wo sie wenigstens teilweise verbrannt werden.

9. Verfahren gemäß einem der Ansprüche 1 bis 8, worin die Oxidationseinheit einen zirkulierenden Wirbelbettreaktor umfasst, der hauptsächlich ausgelegt ist, lediglich die Beseitigung von Verbrennungsrückständen aus dem Bettmaterial zu erreichen und Wärme in dem Umfang zu erzeugen, der durch die Wärmebehandlung benötigt wird.

10. Verfahren gemäß Anspruch 9, worin das endgültige Abbrennen des Verbrennungsrückstands, die Rückgewinnung von Überschusswärme und die Behandlung von Rauchgasen mit einer weiteren Kesseleinheit (20) erreicht werden.

11. Verfahren gemäß einem der vorangehenden Ansprüche, worin die für die Trennung von Feststoffen von gasförmigen Stoffen verwendete Trenneinheit (12; 16) einen Mehrwegzyklon umfasst.

12. Verfahren gemäß Anspruch 11, worin die Trenneinheit (12; 16) eine Zyklonenkaskade von Zyklonen umfasst, worin wenigsten ein weiterer Zyklon, der aus Kinfacheinlasszyktonen und Mehrfacheinlasszyklonen ausgewählt ist, in Reihenanordnung mit dem Mehrwegzyklon angeordnet ist.

13. Verfahren gemäß Anspruch 12, worin die Zyklonenkaskade (12; 16) eine erste Trennstufe, die durch einen Einfacheinlasszyklon gebildet ist, und eine zweite Trennstufe, die durch einen Mehrfacheinlasszyklon gebildet ist, umfasst.

14. Verfahren gemäß einem der vorangehenden Ansprüche, worin das Massenstromverhältnis der Wärme in den Reaktor einbringenden Teilchen und dem kohlenstoffhaltigen Material 1:1 bis 10:1 beträgt.

15. Verfahren gemäß Anspruch 1, worin die Wärme in den Reaktor teilweise unter Verwendung eines Wärmeübertragungsmittels und teilweise direkt über die gemeinsame Wand des Reaktors und der Oxidationseinheit eingebracht wird.

16. Verfahren gemäß einem der vorangehenden Ansprüche, worin der Reaktor Innenschaufeln zur Steigerung der Verwirbelung der Reaktorströmung umfasst.

17. Verfahren gemäß einem der vorangehenden Ansprüche, umfassend einen Zyklon, der eine Außenfläche aufweist, die gekühlt und/oder erwärmt werden kann, zur Verwendung für die Trennung des Feststoffs.

18. Verfahren gemäß einem der vorangehenden Ansprüche, umfassend für die Verwendung
- einen Reaktor, der ein Steigrohr mit einem axial ringförmigen Querschnitt umfasst, das mit einem Mehrwegzyklon zur Trennung der Teilchen bereitgestellt ist, und
- eine Oxidationseinheit, die ein Steigrohr mit einem axial ringförmigen Querschnitt umfasst, das konzentrisch im Innern des Reaktors eingesetzt ist, wodurch die Oxidationseinheit mit einem Mehrwegzyklon zur Trennung der behandelten Teilchen bereitgestellt ist.

19. Verfahren gemäß einem der vorangehenden Ansprüche, worin der Feststoff in zwei Stufen getrennt wird, wonach ein erster, hauptsächlich Feststoff umfassender Teil in einer ersten Stufe getrennt wird und einer Oxidationseinheit wieder zugeführt wird und ein zweiter, hauptsächlich Verbrennungsrückstände umfassender Teil in einer zweiten Stufe getrennt wird und in einem separaten Prozess verwendet wird.

20. Verfahren gemäß Anspruch 19, worin die Verweilzeit in dem Reaktor etwa 0,01 bis 10 beträgt.

21. Verfahren gemäß Anspruch 1, worin das Bett (15) eine Teilchenanzahl von 7 x 10⁸ bis 3 x 10¹¹ Teilchen/m³ (etwa 2 x 10⁷ 1 x 10¹⁰ Teilchen/Kubikfuß) beinhaltet.

22. Verfahren gemäß einem der vorangehenden Ansprüche, worin die mittlere Teilchengröße der Feststoffteilchen 50 bis 120 Mikrometer beträgt.

## Revendications

1. Procédé pour traiter une matière carbonée dans un réacteur, selon lequel procédé :
la matière carbonée est alimentée dans la section de colonne montante (10) d'un réacteur (10 - 15) dans lequel elle est en contact avec une matière particulaire non organique et les parois du réacteur à une température élevée essentiellement en l'absence d'oxygène afin de convertir la manière carbonée principalement en produits traités gazeux, moyennant quoi une phase gazeuse est obtenue, contenant du gaz de fluidisation et des produits traités,
la matière particulaire est séparée de la phase gazeuse dans une unité de séparation (12),
la matière particulaire non organique circule à nouveau dans l'espace de colonne montante (10),
les produits traités sont récupérés,
la matière particulaire non organique formant le matériau de lit (15) du réacteur est traitée avec un gaz oxygéné dans une unité d'oxydation séparée (16 - 18, 33) comprenant un réacteur à lit fluidisé (33),
le matériau alimenté (18) dans l'unité d'oxydation est fluidisé avec un gaz oxygéné afin de brûler le résidu de combustion fixé sur le matériau,
le matériau obtenu par l'unité d'oxydation (16 - 18, 33) est recyclé dans le réacteur (10 - 15), et
facultativement au moins une partie des produits traités est condensée en produits liquides, **caractérisé en ce que**:
une suspension dense est formée dans l'espace de colonne montante (10) du réacteur, contenant en fonction du nombre particulaire 7 × 10⁸ à 3 × 10¹¹ particules/m³ (environ 2 × 10⁷-1 × 10¹⁰ particules/pieds³),
le rapport de masse entre la matière particulaire amenant la chaleur dans le réacteur et la matière carbonée est de l'ordre de 1:1 à 10:1, et
le réacteur et l'unité d'oxydation sont montés ensemble de sorte que les parties chaudes à la fois du réacteur et de l'unité d'oxydation ont chacune une paroi commune, moyennant quoi au moins une partie de la chaleur nécessaire dans le réacteur est amenée par la paroi commune.

2. Procédé selon la revendication 1, dans lequel les produits en phase gazeuse obtenus par la condensation des produits traités, sont recyclés dans l'espace de colonne montante (10) sous la forme de gaz de circulation.

3. Procédé selon la revendication 2, dans lequel la quantité du gaz de circulation est exprimée en volume de gaz, représentant de 0,5 à 2 fois la quantité des produits traités non condensés.

4. Procédé selon la revendication 1, dans lequel le matériau de lit est conduit de l'unité de séparation (16) des matières solides jusqu'au réacteur en utilisant l'unité d'oxydation en tant que convoyeur pneumatique du matériau de lit

5. Procédé selon la revendication 1 ou 4, dans lequel l'unité d'oxydation (16 - 18, 33) comprend un réacteur à lit circulant.

6. Procédé selon la revendication 5, dans lequel l'unité d'oxydation comprend une circulation interne pour l'ajustement du temps de séjour et du degré de régénération.

7. Procédé selon la revendication 1 ou 4, dans lequel l'unité d'oxydation comprend un réacteur à lit bouillonnant.

8. Procédé selon l'une quelconque des revendications 1 à 7, dans lequel les gaz non condensés produits par le procédé, sont également conduits (29) dans l'unité d'oxydation, où ils sont au moins partiellement brûlés.

9. Procédé selon l'une quelconque des revendications 1 à dans lequel l'unité d'oxydation comprend un réacteur à lit fluidisé circulant, qui est dimensionné principalement pour obtenir uniquement le retrait des résidus de combustion du matériau de lit et pour produire la chaleur sur une étendue nécessaire pour le traitement thermique.

10. Procédé selon la revendication 9, dans lequel la combustion finale des résidus de combustion, la récupération de la chaleur en excès et le traitement des gaz d'évacuation sont réalisés avec une autre unité de chaudière (20).

11. Procédé selon l'une quelconque des revendications précédentes, dans lequel l'unité de séparation (12 ; 16) utilisée pour séparer les matières solides des matières gazeuses comprend un cyclone à plusieurs orifices.

12. Procédé selon la revendication 11, dans lequel l'unité de séparation (12 ; 16) comprend une cascade cyclonique de cyclones où l'on trouve au moins un autre cyclone, choisi à partir des cyclones à entrée unique et des cyclones à plusieurs entrées, placé selon un agencement en série avec le cyclone à plusieurs orifices.

13. Procédé selon la revendication 12, dans lequel la cascade de cyclones (12; 16) comprend un premier étage de séparation qui est formé par un cyclone à entrée unique, et un second étage de séparation qui est formé par un cyclone à plusieurs entrées.

14. Procédé selon l'une quelconque des revendications précédentes, dans lequel le rapport d'écoulement de masse de le matière particulaire amenant la chaleur dans le réacteur et la matière carbonée est de 1:1 à 10:1.

15. Procédé selon la revendication 1, dans lequel la chaleur est amenée dans le réacteur partiellement en utilisant un milieu de transfert de chaleur et partiellement directement via la paroi commune du réacteur et de l'unité d'oxydation.

16. Procédé selon l'une quelconque des revendications précédentes, dans lequel le réacteur comprend des pales internes pour augmenter la turbulence de l'écoulement du réacteur.

17. Procédé selon l'une quelconque des revendications précédentes, comprenant l'étape consistant à utiliser pour la séparation de la matière solide, un cyclone qui a une surface externe, qui peut être refroidie et/ou chauffée.

18. Procédé selon l'une quelconque des revendications précédentes, comprenant l'utilisation :
d'un réacteur, qui comprend une colonne montante ayant une section transversale axialement annulaire qui est dotée d'un cyclone à plusieurs orifices pour la séparation de la matière particulaire, et
d'une unité d'oxydation qui comprend une colonne montante ayant une section transversale axialement annulaire qui est montée de manière concentrique à l'intérieur du réacteur, moyennant quoi ladite unité d'oxydation est prévue avec un cyclone à plusieurs orifices pour la séparation de la matière particulaire traitée.

19. Procédé selon l'une quelconque des revendications précédentes, dans lequel la matière solide est séparée en deux étages, moyennant quoi la première partie comprenant principalement la matière solide est séparée dans un premier étiage et recyclée dans une unité d'oxydation, et une seconde partie comprenant principalement des résidus de combustion est séparée dans un second étage et utilisée dans un processus séparé.

20. Procédé selon la revendication 19, dans lequel le temps de séjour dans le réacteur est d'environ 0,01 à 10 s.

21. Procédé selon la revendication 1, dans lequel le lit (15) contient un nombre particulaire de 7 × 10⁸ - 3 × 10¹¹ particules/m³ (environ 2 × 10⁷ - 1 × 10¹⁰ particules/pieds³).

22. Procédé selon l'une quelconque des revendications précédentes, dans lequel la taille particulaire moyenne des particules de matière solide est de 50 à 120 micromètres.
